Europäisches Patentamt

European Patent Office

Office européen des brevets

(19)

(11) **EP 1 001 665 A2**

(12) **EUROPEAN PATENT APPLICATION**

(43) Date of publication:
**17.05.2000 Bulletin 2000/20**

(51) Int Cl.⁷: **H05G 1/42**

(21) Application number: **99308822.8**

(22) Date of filing: **05.11.1999**

(84) Designated Contracting States:
**AT BE CH CY DE DK ES FI FR GB GR IE IT LI LU
MC NL PT SE**
Designated Extension States:
**AL LT LV MK RO SI**

(30) Priority: **09.11.1998 US 188278**

(71) Applicant: **GENERAL ELECTRIC COMPANY
Schenectady, NY 12345 (US)**

(72) Inventors:
• **Possin, George Edward
Niskayuna, New York 12309 (US)**
• **Wodnicki, Robert Gideon
Schenectady, New York 12308 (US)**
• **Han, Sung Su
Niskayuna, New York 12309 (US)**

(74) Representative: **Goode, Ian Roy et al
GE LONDON PATENT OPERATION,
Essex House,
12/13 Essex Street
London WC2R 3AA (GB)**

(54) **Exposure control for a matrix-addressed imaging panel**

(57)    Automatic exposure control (125) for an X-ray imaging panel (118) is obtained by using parasitic coupling (136,138) between radiation sensor (130) in the array of the panel and corresponding data lines (134,140). The capacitive coupling allows the same sensing or detection system used for imaging to also be used to shut off X-ray when a desired exposure level had been reached.

**FIG. 2**

**Description**

The present invention relates to solid state radiation imagers , and more particularly to an exposure control arrangement for a matrix-addressed imaging panel to avoid saturation of elements in the imaging panel.

It is desirable to have real time readout of the accumulated X-ray dose or signal in a panel of sensors sensing X-ray doses during exposure of an object (such as a person who is a medical patient) being imaged. Such a measure of accumulated dose is used to determine when the desired exposure level has been reached such that the X-ray tube can then be turned off. The desired exposure depends on factors such as the characteristics of the imaging system (e.g., need to avoid saturation), the characteristics of the object being imaged (e.g., in the case of a patient, the dose suitable under the best medical practice), or both factors. The method of turning off the X-ray tube based on the accumulated X-ray dose measurement is typically called automatic exposure control (AEC).

In one type of imaging system, the AEC includes one or more dedicated radiation sensors positioned below a detector (e.g., outside of an imaging panel) or film cassette. Signals generated by X-rays absorbed in the active volume of the sensor are used to infer the dose absorbed by the imaged object or by the imaging device. This method suffers from a number of disadvantages, including increased system cost and complexity (for the dedicated exposure control components), and the difficulty of calibrating the system (with the exposure control sensors separate from the imaging panel or film) to correlate the signal generated by the radiation sensor with the absorbed dose in the detector or object.

It is desirable to have a robust and effective system by which to sense imager panel saturation, and that system also desirably does not adversely affect the complexity, cost, or operating characteristics of the imaging panel. Such a system also desirably is readily calibrated.

According to the present invention, there is provided an imaging system which includes a matrix-addressed imaging panel having a plurality of pixels, each of which comprises a respective radiation sensor. Each pixel further comprises at least one respective pixel readout switch disposed to selectively couple the pixel radiation sensor to a respective data line in the imaging panel. At least one data line exposure signal, derived from at least one exposure-monitoring data line in the imaging pane, is coupled to an exposure controller. During this mode of operation the system is configured to sense a capacitively-coupled data line exposure signal from at least one radiation sensor capacitively-coupled to the exposure-monitoring data line. The data line exposure signals are processed by the exposure controller to provide a panel exposure signal corresponding to incident radiation sensed during an exposure control period when the respective pixel readout switches for the exposure-monitoring data line are in an electrically open condition.

The invention also provides a method of operating an imaging system having a matrix-addressed imaging panel having a plurality of radiation sensor pixels, each pixel radiation sensor being connected via a respective pixel readout switch to a respective data line, includes the steps of: sensing exposure signals appearing on at least one data line from at least one radiation sensor with the pixel readout switches open; and generating a panel exposure signal based on the data line exposure signals generated during the periods when the pixel readout switches on a data line are in a non-conductive condition. The exposure signals that appear on the data lines via capacitive coupling of the photodiodes to the data lines and are sensed by an exposure controller configured to generate a panel exposure signal that typically is used as a control input for the imaging energy source.

The above and other features of the present invention will be more readily understood when the following detailed description is considered in conjunction with the accompanying drawings wherein like characters represent like parts throughout the several views and in which:

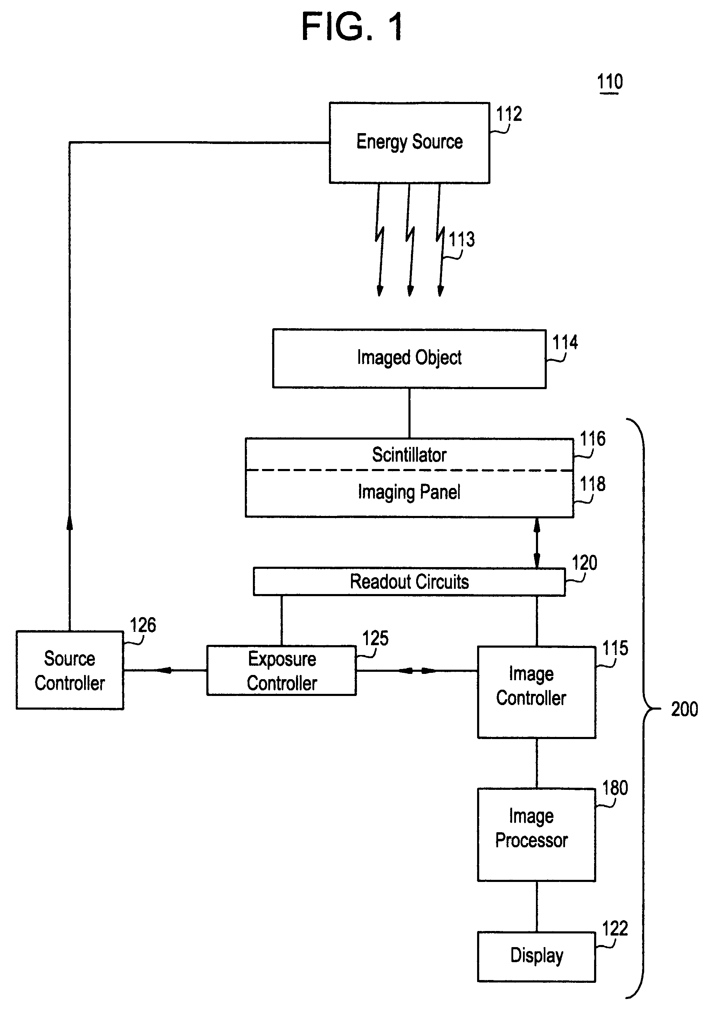

FIG. 1 is a simplified block diagram of a radiation imager in accordance with the present invention; and

FIG. 2 is a combined simplified block diagram and schematic of the imaging system according to the present invention.

A radiation imager 110 in accordance with the present invention comprises a radiation imaging energy source 112 disposed to illuminate an object 114 to be imaged with radiation energy 113. Radiation energy 113 passing through object 114 is sensed in a radiation detector 200 that comprises an imaging panel 118, readout circuits 120, an imager processor 115, and an exposure controller 125. Exposure controller 125 and imager controller 115 are coupled to a source controller 126 that controls the state of energy source 112; imager processor is also coupled to a display 122 for presenting image data generated by imager 110.

Imaging panel 118 typically comprises a matrix-addressed array of pixels (described in greater detail below), each of which comprises a respective radiation sensor. "Matrix-addressed" refers to rows and columns of pixels, each coupled to a respective data line and to a respective control line (often referred to as a "scan" line in the digital imager art) so that data from pixels can be selectively readout by controlling electrical coupling of the radiation sensors to their respective data lines. Each pixel further comprises at least one respective pixel readout switch disposed to selectively couple the pixel radiation sensor to a respective data line in the imaging panel. When operating, the imager is controlled during an exposure cycle to provide a collection period when the pixels are electrically disconnected from the respective data lines while collecting charge corresponding to the incident radiation flux, and a readout period when the pixel radiation sensor is electrically connected to the data line to enable the data to be collected by the readout electronics circuits coupled to the panel.

Exposure controller 125 is configured to control source controller 126 (and hence the illumination of object 114 with radiation 113) during operation of the imager 110, as detailed below. As used herein, "adapted to", "configured" and the like refer to computational and control devices (such as programmable computing devices and application specific integrated circuits) that are programmed to generate an output (e.g., a control signal) in correspondence with one or more input signals. "Exposure control," as used herein, refers to monitoring exposure (or dose) of radiation 113 incident on at least a portion of imager panel 118, in particular during the collection period of the imaging readout cycles when the pixel radiation sensors in imager panel 118 are not directly connected (that is, not connected via the respective pixel readout switch) to the data lines. In embodiments of this invention, the sensing of exposure during the collection period is done with the radiation sensors and matrix-address lines (e.g., data lines) already in the imager panel, without the need for separate radiation sensors dedicated for exposure control monitoring.

Sensing exposure during these collection periods is desirable for several reasons For example, radiation exposure of the imaged object 114 is a factor when imaging a human or animal subject as medical considerations dictate tracking exposure such that overexposure to X-rays is avoided. Further, image quality can be degraded If the exposure is too high so that panel 118 may fail to provide desired information as too many of the radiation sensors will be in saturation. Additionally, proper imaging requires at last a minimum level of exposure to generate useful image information such that tracking exposure can also be used to ensure that sufficient radiation energy is applied

Imaging panel 118 typically further comprises a scintillator 116 that is optically coupled to the array of semiconductor radiation sensors in imaging panel 118. In such an arrangement, the radiation sensors typically comprise photosensors, such as photodiodes or the like. In operation, the incident radiation (such as x-rays) is predominantly absorbed in the scintillator layer (comprising, e.g., cesium iodide or the like), resulting in the generation of optical photons, which in turn are detected by the photosensor array. The exposure control modalities of the present invention can also be used with alternative embodiments of a radiation imaging panel, such as detectors comprising direct conversion devices (that is, devices that directly convert incident radiation (such as x-rays) to electrical charge without use of a scintillator.

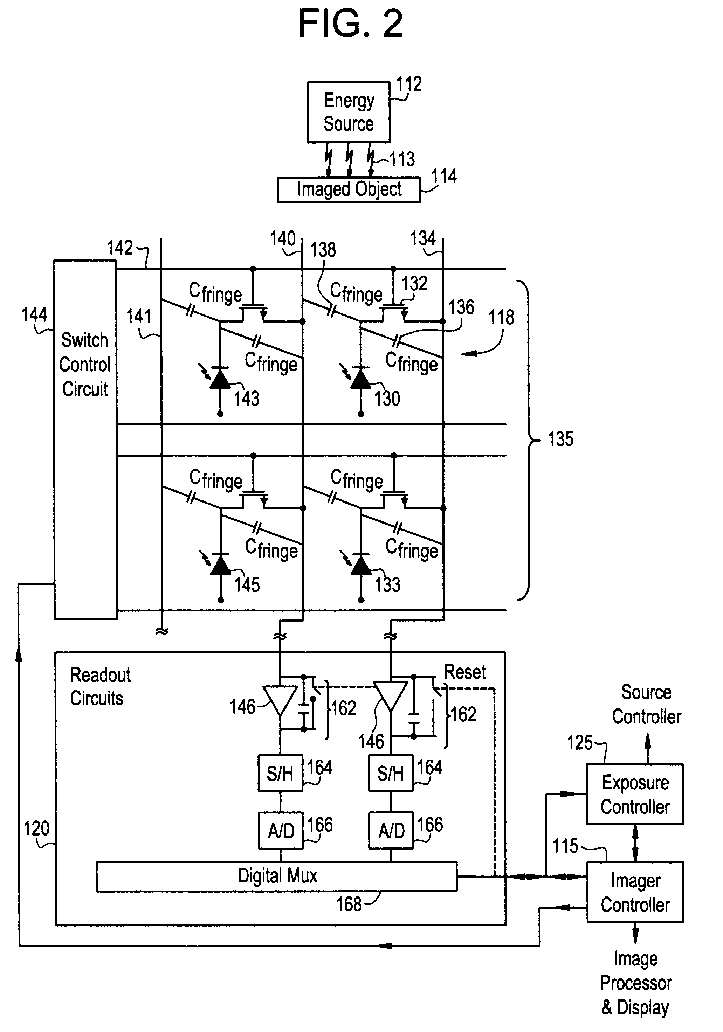

One embodiment of the present invention in imaging system 110 is illustrated in Figure 2. By way of illustration and not limitation, radiation energy source 112 comprises an x-ray tube and imaging panel 118 comprises a scintillator 116 (not illustrated in Figure 2) coupled to a photosensor array 135.

Photosensor array 135 in panel 118 comprises a plurality of rows and columns of semiconductor components (such as representative photodiode 130 and associated readout switch 132), only some of which are labeled for ease of illustration. Photodiodes 130 are selectively connected by pixel readout switches, such as thin film field effect transistors ("FETs") 132 to corresponding data lines 134, which lines are shown extending vertically in Figure 2, thereby defining columns in the array of panel 118.. Alternatively, diodes can be used in some arrangements to provide pixel switching. It will be appreciated that Figure 2 only shows a few columns and a few rows of the array, but a quite large number of columns and rows are used in an actual imaging panel 118.

For purposes of illustrating the present invention, a parasitic fringing capacitance 136 that capacitively couples a given photodiode 130 to its corresponding data line 134 and a similar fringing capacitance 138 that capacitively couples a given photodiode 130 to an adjacent data line 140 (i.e., this data line corresponds to a photodiode in an adjacent column) is shown in Figure 2. As used herein, "fringing capacitance," "parasitic capacitance" and the like refers to the electrical performance characteristic noted above and it does not imply that a separate capacitor structure needs to be specifically built into the array structure. The present invention uses the normally undesirable fringing capacitance as a source of signals for the exposure control system, thereby lowering the cost and complexity of an imaging system.

Each row of switches 132 has a corresponding scan or control line 142 (also referred to as a scan line, shown extending horizontally in Figure 2) responsive to switch control circuit 144 in order to close all switches in a given row (corresponding to a respective control line 142) at a time in the image readout cycle to enable readout via the respective data lines 134 of radiation sensors 130 along that row.

Data lines 134 are coupled to readout circuits 120 that collect the electrical signals from the panel and distribute these signals to controller 115 and image processor 180. Readout circuits 120 comprise a plurality of integrating amplifiers 146 coupled to the data lines; a typical arrangement, as is illustrated in Figure 2, a respective amplifier 146 is coupled to each data line. A respective reset circuit 162 is coupled to each amplifier 146 to enable resetting the amplifier to a known condition prior to charge integration for image or exposure signal readout. Each amplifier 146 is further coupled to a respective sample and hold circuit 164 that measures the total charge received (which corresponds to the voltage out of the charge amplifier) by the respective amplifier 146 to which it is coupled. The signal generated by S/H circuit 164 is coupled to a respective analog-to-digital converter 166 and thence to a digital multiplexer 168 for further distribution to controller 115 and display 180.

Exposure controller 125 is adapted to receive exposure signals from at least one amplifier 146 coupled to at least one data line in imager panel 118; typically a plurality of data lines are used to monitor exposure, and most commonly, all data lines in imager panel 118 are used (the particular lines monitored for exposure control can be selected, for example, by control signals applied to digital multiplexer 168). Controller 125 is configured to generate a panel-exposure signal in correspondence with the at least one exposure signal received from imager panel 118; this panel-exposure signal is further used to generate a control signal (when a selected exposure level has been met) that is coupled to source controller 126 to cause energy source 112 to cease irradiating imaged object 114.

Commonly, each data line in imager panel 118 is coupled, via readout circuit 120, to exposure controller 125. In a further embodiment, a selected grouping of data lines less than the total number of data lines in the panel (e.g., a group such as data lines 134, 140, 141 in Figure 2) are coupled to exposure controller 125 so that signals from these data lines are used to generate the panel exposure signal. The choice of data lines to be coupled to exposure controller 125 can be accomplished selectively with digital multiplexer 168. Thus, for example, depending upon the object being imaged, the operator of imager 110 (or alternatively, a program in controller 115) can select an appropriate model of exposure areas of interest on the panel 118. Exposure areas of interest refer to areas where, because of the nature of the imaged object 114, the measured exposure during the exposure readout cycle will provide a good sample to use determine the appropriate period of irradiation of the imaged object, as discussed in more detail below.

In a normal image read cycle, for a single scan line, the respective charge amplifiers 146 are reset to a known condition (e.g., a selected voltage). Readout of signal for image generation is commenced via image controller 115 and switch control circuit 144 to turn on (that is, cause the FETs to become conductive) the respective pixel readout switches (e.g., switch 132) on a given scan line (e.g., scan line 142); this condition enables the charge accumulated on photosensor 130 to be transferred to the respective charge amplifier 146 coupled to the respective data line (e.g., line 134). The scan line is then controlled (by signals from switch control circuit 144) to the off condition, and the charge received by amplifier 146 is transferred to S/H circuit 164 and thence to A/D circuit 166, and ultimately to multiplexer 168. The typical time to complete one readout function for a single line is in the range between about 30 microseconds to about 100 microseconds.

In the Automatic Exposure Mode of operation, all scan lines are controlled to be in the "off" state so that no photosensors are directly coupled their respective data lines. In this mode, with the charge amplifiers 146 reset to a known condition, the charge that is capacitively coupled to each data line continuously transfers to the respective amplifier 146 coupled to that data line. The charge received by the amplifier since the last reset (e.g., start of a cycle) is captured by S/H circuit 164 and A/D circuit 166. Signals from respective data lines received by digital multiplexer 168 are coupled to exposure controller 125. The amplifier is typically reset multiple times during the monitoring of each radiation exposure from energy source 112. A single reset cycle per exposure is possible but typically the charge level induced on the data line will exceed the maximum signal capacity of the amplifier. These multiple sequential samples of the coupled charge are summed. This sum of signals representing accumulated capacitively coupled charge detected on a data line is generated; this sum signal represents accumulated dose for the data lines monitored and is used to generate a control signal to cease radiation exposure of object 114 at a given accumulated dose. Each x-ray exposure is typically in the range between about 0.1 second and 10 seconds.

By way of example and not limitation, imager 110 can be used to image an abdomen in a human. If the imager is aligned such that the data lines are approximately parallel to the long axis of the person being imaged, the pixels in imager panel 118 in the central region of the panel underlie thick regions of the body. In this situation, the x-ray signal per pixel in the central region of the abdomen is proportional to the total signal divided by the number of pixels attached to that data line, and the magnitude of the x-ray exposure can be calculated as outlined below.

In another example, imager 110 can be used for mammography. In this arrangement, the exposure area of interest is in the central region of image representing most of the breast. Because the breast is compressed to a constant thickness, the x-ray exposure to the imager is similar under most of the breast. From the spatial variation of the signal from the data lines the shape of the breast can be estimated. This shape information can be used to infer the fraction of the pixels covered by breast tissue for each data line. In particular, near the chest wall most or all of the pixels will be covered. For a CC (that is, top) view, typically about 75% of the pixels in the panel underlie tissue; for a lateral view, typically all pixels are covered in most (about 75%) of clinical cases. For the central regions of the imager, underlying the mass of tissue, the x-ray exposure per pixel corresponds to the signal detected on an exposure monitoring data line divided by the number of pixels on that data line. When some number of the pixels on a data line are not covered by tissue, one will have a much higher signal and the signal due to the uncovered pixels must be subtracted from the total data line signal to give a value representative of the exposure in the tissue-covered region. The signal to be subtracted in this latter case can be estimated from a mode suggesting the number of uncovered pixels; this procedure suffers greater inaccuracy when as the number of uncovered pixels on a data line increases. Alternatively, and x-ray opaque material (for example a metal such as tungsten or copper with thickness of about 1 mm) can be inserted up to the tissue overlying the imager panel so as to reduce the number of uncovered pixels

A radiation imager comprising exposure controller 125 in accordance with the present invention utilizes the radiation sensors in imaging panel 118 as the source for exposure signals to calculate exposure. This arrangement obviates the need for sensors separate from the panel to determine exposure and also obviates the need for a calibration process to correlate detected radiation at an off-panel sensor with the radiation incident on the detector panel.

A better appreciation of the operation of exposure controller 125 can be obtained with a more detailed review of characteristics of the panel 118. The cathode side of photodiode 130 is capacitively coupled to a respective exposure monitoring data line 134 (that is, the data line to which diode 130 is coupled via respective pixel readout switch 132) and an adjacent exposure monitoring data line 140 (that is, the data line to which an adjacent photodiode 143 in that row of photodiodes is coupled via its respective pixel readout switch). The magnitude of this parasitic coupling capacitance $C_{fringe}$ varies with the panel structure. Typically, it is in the range of 0.2 to 0.7 pF/cm or 0.002 to 0.007 pF/pixel for 100 micron pixels. The potential at the cathode of diode 132 changes as the panel 118 is struck by X-rays. Some of this charge is capacitively coupled to the data line 134. The ratio of this coupled charge signal to the charge induced on the diode is given by:

$$C_{fringe}/C_{diode} \sim 0.005/0.5 = 0.01, \text{ or } 1\%$$

where $C_{diode}$ is the capacitance of the photodiode 130.

The signals from all diodes in a given column of pixels couples to their respective data line (e.g., data line 134 for photodiodes 130, 133, and others (not shown) in that column of the array) and to their adjacent data line (e.g., data line 140 for photodiodes 143, 145, and others (not shown) in that column of the array). For a typical panel used in mammography, there are about 2300 diodes per data line ($N_d$) and the coupling occurs for diodes on each side. Therefore, there is twice that number or 4600 diodes coupled to each exposure monitoring data line. The coupled signal on a given data line (other than data lines at the edge of the imager panel, where diodes are only on one side of them) is about 46 times (0.01 X (2 $N_d$) = 46) the accumulated charge on a single pixel, if all the pixels are illuminated equally.

The readout amplifiers 146 amplifiers (also referred to as charge amplifiers) are coupled to each data line in imager panel 118 to provide the pixel readout signal during the image readout process. These same amplifiers are used to detect the charge induced on the data lines during the collection portion of the readout cycle and provide this information to exposure controller 125. This combined use of readout amplifiers 146 is accomplished by modifying the readout timing normally used during the imaging process. The minimum charge integration time of a typical solid state radiation imager readout amplifier design is about 30 psecs. Longer charge integration times are easily obtained achieved and can be controlled by signals from the imager or exposure controller. The maximum rate of charge generation in each pixel diode is about 3 pC/sec and the amplifier saturates at about 5 pC, depending on the gain range. Integrating the charge induced on a given signal line for a relatively short exposure time of 8000 psecs would yield a signal of about:

$$(8000 \, \mu secs) \, (3 \, pC/sec)(46) = 1.1 \, pC$$

The readout amplifiers 146 are controlled to perform integration during the entire time of irradiation of the object 114 and the integrated signals from each exposure monitoring data line coupled (via readout circuits 120) to exposure controller 125 are summed. Exposure controller 125 typically is configured to provide a quasi-continuous readout of average integrated charge for each column of pixels along a selected exposure monitoring data line. In this embodiment the signals from the A/D's 166 occurs about every 100 usecs, providing a sufficiently rapid temporal sampling of the data line exposure signal to the exposure controller. During the collection phase of the exposure readout cycle (during which charge representative of radiation exposure is accumulating of the respective photodiodes in the array), the respective pixel readout switches are controlled to be in a non-conductive condition so that there is no direct conductive path between a photodiode in the array and its respective data line.

The integration time selected for the readout amplifiers 146 is determined by read and reset circuit 120 in imager processor 115. To optimize use of exposure controller 125, the readout timing (that is, the rate at which the signal from the amplifiers 146 is sampled by the sample and hold circuits 164 and digitized by the A/D's 166 ) is selected to be between about 0.1 and about 10 msecs. The number of times the amplifiers 162 are reset during the exposure period can vary between 1 and about 100 times. A single reset is desirable but multiple resets commonly are selected to prevent saturation of the amplifiers 162. In the multiple reset mode the amplifier output is sampled just prior to closing reset switch 162. These intermediate charge samples are summed in the exposure controller to provide a measure of the total charge accumulating on the photodiodes. The time between reset of the amplifiers 146 is typically 1 to 100 msecs. The time between reading of the A/D's is typically every 0.1 to 10msecs. An alternate mode of operation is to always digitize the output of the amplifier once just before amplifier reset. During each frame time, these instantaneous charge-induced signals on the data lines are monitored by exposure controller 125 thereby giving a nearly continuous measure of the accumulated X-ray exposure during a given collection period during which the object 114 is irradiated. Once a selected exposure level is reached (determined, as noted above., upon factors such as image quality, patient exposure, procedure times), exposure controller 125 generates a signal that is coupled to source controller 126 to cause source 112 to stop irradiation of object 114 (e.g., by turning or covering the source, or deenergizing the source.

In operation, at the start of a readout cycle controlled by imager processor 115, energy from imaging energy source 112 is applied to object 114. During the collection period of the exposure cycle, exposure signals capacitively coupled to exposure-monitoring data lines are sensed by exposure controller 125. Cumulative imaging energy exposure during a given collection period in an exposure cycle is determined based on integration of the capacitively-coupled exposure signals on the monitored data lines. The imaging energy source is controlled by exposure controller 125 to cease irradiating object 114 when a predetermined radiation exposure level has been reached. Then, the pixel readout switches are selectively closed to enable readout of charge accumulated on the radiation sensors in the array, which readout signals are processed to generate an image of the object 114.

## Claims

1. A method of operating an imaging system including a matrix-addressed imaging panel having a plurality of radiation sensors, each sensor selectively connected via a respective pixel readout switch to a respective data line, the steps comprising:

   applying imaging energy from an imaging energy source to an object;

   sensing at least one data line exposure signal from an exposure-monitoring data line, wherein at least one radiation sensor is capacitively coupled to said exposure-monitoring data line with the pixel readout switches in an electrically open condition; and

   generating a panel exposure signal in correspondence with said sensed exposure signals on said at least one exposure-monitoring data lines.

2. The method of operating an imaging system of claim 1 wherein the imaging energy source applies X-rays, and said radiation sensors are selected from the group consisting of photosensors and direct semiconductor x-ray detectors and said pixel switches are selected from the group consisting of diodes and field effect transistors.

3. The method of operating an imaging system of Claim 2 wherein each of said radiation sensors comprises a photodiode and said imaging panel further comprises a scintillator optically coupled to an array of said photodiodes.

4. The method of operating an imaging system of Claim 1 further comprising the step of controlling irradiation of the object to be imaged in correspondence with said panel exposure signal.

5. The method of operating an imaging system of Claim 4 further comprising the step of processing said data line exposure signals to generate said panel exposure signal.

6. The method of operating an imaging system of Claim 5 further comprising the step of selecting at least one exposure monitoring data line to be monitored by said exposure controller.

7. The method of operating an imaging system of Claim 6 wherein the step of selecting at least one exposure monitoring data line further comprises the step of applying a model of the object to be imaged to extract imager panel exposure information in areas of interest.

8. The method of operating an imaging system of Claim 3 wherein said pixels capacitively coupled to said exposure monitoring data line comprise a column of respective exposure-monitoring data line photodiodes that are disposed to be coupled to said exposure monitoring data line by said pixel readout switches, and photodiodes in adjacent columns to the column of respective exposure-monitoring data line photodiodes.

9. The method of operating an imaging system of Claim 8 further comprising the step of turning off the imaging energy source based on the exposure signals on the data lines.

10. The method of operating an imaging system of Claim 4 wherein the step of the step of controlling irradiation of the object to be imaged in correspondence with said panel exposure signal further comprises at least one of the steps of deenergizing the imaging energy source and covering said imaging energy source to block radiation passage between said source and the object to be imaged.

11. An imaging system comprising:

a matrix-addressed imaging panel having a plurality of pixels;

each of said pixels comprising at least one respective radiation sensor and at least one respective pixel readout switch disposed to selectively couple the pixel radiation sensor to a respective data line in said imaging panel; and

an exposure controller coupled to at least one exposure-monitoring data line in said imaging panel, said exposure controller being configured to sense a capacitively-coupled exposure signal from at least one radiation sensor capacitively coupled to said exposure-monitoring data line and to generate a panel exposure signal corresponding to incident radiation sensed during an exposure control period when the respective pixel readout switches for said exposure-monitoring data line are in an open condition.

12. The imaging system of Claim 11 wherein said radiation sensors are selected from the group consisting of photosensors, and radiation direct detection diodes.

13. The imaging system of Claim 11 wherein said exposure controller is coupled via a readout circuit to respective ones of data lines in said imaging panel, said readout circuit comprising a respective charge amplifier for each of said data lines.

14. The imaging system of claim 11 wherein said exposure controller is configured to generate said panel exposure signal corresponding to the received exposure signals from said readout circuits, said panel exposure signal being representative of radiation exposure incident on said imaging panel during a collection period in an exposure cycle of said imaging system.

15. The imaging system of Claim 11 further comprising an imaging energy source and a source controller coupled to said energy source and to said exposure controller so as to be responsive to a control signal from said exposure controller to cause said energy source to cease irradiating the object to be imaged.

16. The imaging system of Claim 11 wherein the imaging energy source is an X-ray source.

17. An imaging system comprising

a matrix-addressed imaging panel having an array of photosensor pixels coupled to a scintillator;

an x-ray source coupled to a source controller and disposed to irradiate an object to be imaged disposed between said source and said imaging panel in response to signals from said source controller;

an imager controller being configured to control readout from respective photosensor pixels in said imaging panel, each of said photosensor pixels comprising a photodiode coupled to a respective data line via a respective pixel readout switch, said pixel readout switch being responsive to signals generated by said imager controller; and

an exposure controller coupled to said imager panel to selectively receive capacitively-coupled exposure signals from at least one of said data lines when said respective pixel readout switches coupled to said at least one data line are controlled to be in a non-conductive state;

said exposure controller being coupled to said source controller and configured to generate a panel exposure signal in correspondence with said capacitively-coupled exposure signals and to generate a control signal to be applied to said source controller.

18. The imager of claim 17 wherein said exposure controller is selectively coupled to said data lines via a readout circuit.

19. The imager of claim 17 wherein said readout circuit comprises means for selectively coupling signals from respective data lines to said exposure controller.

20. The imager of claim 17 wherein said exposure signals represent signal on a respective data line coupled to said data line via a fringe capacitance between said data line a photodiodes in respective columns in said imager panel disposed on either side of said data line.

# FIG. 1

<u>110</u>

# FIG. 2